# EUROPEAN PATENT SPECIFICATION

(11) **EP 1 955 828 B1**
(45) Date of publication and mention of the grant of the patent: **29.07.2009**
(21) Application number: 05785901.9
(22) Date of filing: 20.09.2005
(51) Int. Cl.: B25J 9/06, B25J 9/10, F16H 25/20, F16H 25/22

(54) **INDUSTRIAL ROBOT**
INDUSTRIEROBOTER
ROBOT INDUSTRIEL

(43) Date of publication of application: 13.08.2008
(73) Proprietor: Shimada, Toshiaki, Hiroshima-shi, Hiroshima 731-0102 (JP)
(72) Inventor: Shimada, Toshiaki, Hiroshima-shi, Hiroshima 731-0102 (JP)
(74) Representative: Roger, Walter
(86) International application number: PCT/JP2005/017307
(87) International publication number: WO 2007/034539

(56) References cited:
- DE-A1- 3 938 353
- DE-A1- 4 412 403
- JP-A- 2 113 152
- JP-A- 5 228 863
- JP-A- 10 006 272
- JP-A- 61 024 872
- JP-A- 63 047 080
- JP-A- 63 163 063
- JP-A- 63 231 055
- JP-A- 2003 343 679
- JP-U- 3 019 683
- US-A- 5 098 024
- US-A1- 2008 069 679

## Description

### Technical Field and Background Art

The present invention relates to an articulated industrial robot according to the preamble of claim 1 as known by JP-A-5228863 and specifically falls within a technical field relating to a structure that improves the flexibility in movement of a robot arm.

Conventionally, for example, in assemblage factories, cargo handling fields, etc., a workpiece which exists at a certain place is carried to a destination by an industrial robot. A well-known example of such an industrial robot used for carrying a workpiece is an articulated industrial robot having a robot arm which is formed by connecting a plurality of arm components as disclosed in JP-A-63047080. Among the plurality of arm components of this industrial robot, a base-side arm component provided on the base side is swingably connected to a base by a connection shaft which extends generally horizontally. A tip-side arm component provided on the tip side is swingably connected to the tip-side end of the base-side arm component by a connection shaft which extends generally horizontally. The tip-side end of the tip-side arm component is provided with a wrist for grasping a workpiece. The tip-side arm component and the base-side arm component are swung around the connection shafts by actuators to move the wrist, whereby the workpiece is carried to a destination.

### Disclosure of Invention

### Problems to be solved by the invention

In the assemblage factories and cargo handling fields, obstructing articles are sometimes distributed around a place where a workpiece to be transferred exists and a destination to which the workpiece is to be transferred. In the case where the industrial robot of Patent Document 1 is used in such a work field, it is difficult to move the robot arm in such a manner that arm components and a workpiece are not interfered with by the articles around a place where the workpiece exists and a destination to which the workpiece is to be transferred. This is because this industrial robot has low flexibility in movement of the robot arm such that the arm components only swing around connection shafts.

The above problem can be dismissed by removing the surrounding articles or moving the robot arm itself to a different place such that the arm components and the workpiece are not interfered with by the surrounding articles. However, this solution is sometimes difficult to apply because of the space of the work field, the locations of the place where the workpiece exists and the destination to which the workpiece is to be transferred.

The present invention was conceived in view of the above circumstances. An objective of the present invention is to improve the flexibility in movement of a robot arm to smoothly transfer a workpiece without removing articles around the place where the workpiece exists and the destination to which the workpiece is to be transferred or moving the robot arm itself to a different place such that arm components and the workpiece are not interfered with by the surrounding articles.

### Means for solving the problems

As known, an arm component of a robot arm which is closer to a base than a tip-side arm component of the robot arm is divided at an axially intermediate position into a base-side part and a tip-side part, and the tip-side part is rotated around the arm axis relative to the base-side part.

Specifically, an articulated industrial robot comprises: a robot arm including a plurality of arm components swingably connected to one another by connection shafts; and a base to which the robot arm is connected, wherein the robot arm includes arm actuation means for swinging the arm components, the arm components includes a first arm component at a tip side of the robot arm, the first arm component having a wrist at its tip-side end, and the arm components includes a second arm component which is closer to the base than the first arm component is, the second arm component being divided at an axially intermediate position into a base-side part and a tip-side part, and the second arm component having rotation means for rotating the tip-side part around the arm axis relative to the base-side part.

With the above structure, when the tip-side part of the second arm component is rotated by the rotation means around the arm axis, the first arm component provided on the tip side of the robot arm rotates in the same direction. Since the first arm component is actuated by the arm actuator to swing, the swing direction of the first arm component can be changed according to the rotation angle of the tip-side part.

According to the invention as defined in claim 1 the improved rotation means includes a drive shaft extending in the arm axis direction and having a thread groove in its outer surface, a moving device for axially moving the drive shaft, and a threaded member meshed with the thread groove of the drive shaft; and the moving device is fixed to one of the base-side part and the tip-side part, while the threaded member is fixed to the other.

With the above structure, for example, in the case where the moving device is fixed to the base-side part and the threaded member is fixed to the tip-side part, axial movement of the drive shaft by the moving device causes the threaded member to rotate along the thread groove of the drive shaft. Accordingly, the tip-side part rotates around the arm axis. Alternatively, in the case where the moving device is fixed to the tip-side part and the threaded member is fixed to the base-side part, axial movement of the drive shaft by the moving device causes the drive shaft and the moving device to rotate relative to the threaded member of the base-side part. Accordingly, the tip-side part rotates around the arm axis.

According to a preferred embodiment of the invention, the base-side part and the tip-side part are hollow; and the moving device is contained in one of the base-side part and the tip-side part, while the threaded member is contained in the other.

With the above structure, the rotation means can be contained inside the second arm component.

According to a preferred embodiment of the invention, the moving device includes a nut meshed with the thread groove of the drive shaft, a motor for rotating the nut around the drive shaft, and a speed reduction mechanism for reducing a rotation speed of the output shaft of the motor to transmit a torque of the motor to the nut.

With the above structure, when the nut is rotated by the motor, the drive shaft axially travels. Since at this step the rotation speed of the output shaft of the motor is reduced so that the torque of the nut is increased, a large thrust of the drive shaft can be secured even when a low-power, light-weight motor is used, and accordingly, the tip-side part can be rotated around the arm axis with sufficient force.

According to a preferred embodiment of the invention, the first arm component includes wrist actuation means for reciprocating the wrist in the arm axis direction.

With the above structure, for example, when the process of transferring a workpiece is accompanied by the necessity of moving the workpiece in the arm axis direction, the workpiece can be moved in the arm axis direction only by reciprocating the wrist using the wrist actuator without swinging any arm component.

### Effects of the invention

According to the invention, the tip-side part can be rotated around the arm axis only by linearly moving the drive shaft.

According to the preferred embodiment, the rotation means can be contained in the second arm component. Therefore, the robot arm having the rotation means can be compactly constructed.

According to the next preferred embodiment, the tip-side part of the second arm component can be rotated with sufficient force using a low-power, light-weight motor. Therefore, the robot arm having the rotation means can be a light-weight robot arm.

According to the next preferred embodiment, only the wrist can be reciprocated in the arm axis direction without swinging any arm component. Therefore, the flexibility in movement of the robot arm can be further improved. Further, when the wrist is moved in the arm axis direction, it is only necessary to control the wrist actuator without swinging any arm component. Thus, the control of the robot arm can be simplified.

### Brief Description of Drawings

FIG. **1** is a side view of an industrial robot according to an embodiment.
FIG. **2** is an enlarged back view of the industrial robot which shows the base side of a base-side arm component and elements therearound.
FIG. **3** is a cross-sectional view taken along line **A-A** of FIG. **1****.**
FIG. **4** is a cross-sectional view taken along line **B-B** of FIG. **3****.**
FIG. **5** is a block diagram of the industrial robot.
FIG. **6** is a schematic illustration of the industrial robot.
FIG. **7** is an illustration corresponding to FIG. **1** in which the tip-side part of an intermediate arm component is rotated around the arm axis.
FIG. **8** is a back view of the industrial robot in which the tip-side part of the intermediate arm component is rotated around the arm axis.
FIG. **9** is an illustration corresponding to FIG. **3** in which a connector is provided between the base-side part and tip-side part of the intermediate arm component.
FIG. **10** is a cross-sectional view taken along line **C-C** of FIG. **9****.**

### Description of Reference Numerals

- 1: Industrial robot
- 2: Base
- 3: Robot arm
- 11: Base-side arm component
- 12: Intermediate arm component (Second arm component)
- 13: Tip-side arm component (First arm component)
- 14: Wrist
- 20: Base-side part
- 21: Tip-side part
- 22: Arm rotator (Rotation means)
- 30: Drive shaft
- 30a: Thread groove
- 31: Moving device
- 32: Threaded member
- 33: Motor
- 34: Speed reduction mechanism
- 35: Nut
- 37: Output shaft
- 61: Base-side arm actuator (Arm actuation means)
- 62: Intermediate arm actuator (Arm actuation means)
- 63: Tip-side arm actuator (Arm actuation means)
- 78: Wrist actuator (Wrist actuation means)

### Best Mode for Carrying Out the Invention

Hereinafter, an embodiment of the present invention is described with reference to the drawings. It should be noted that the following descriptions of the preferred embodiment are merely exemplary in essential and do not intend to limit the present invention, applications thereof, or uses thereof.

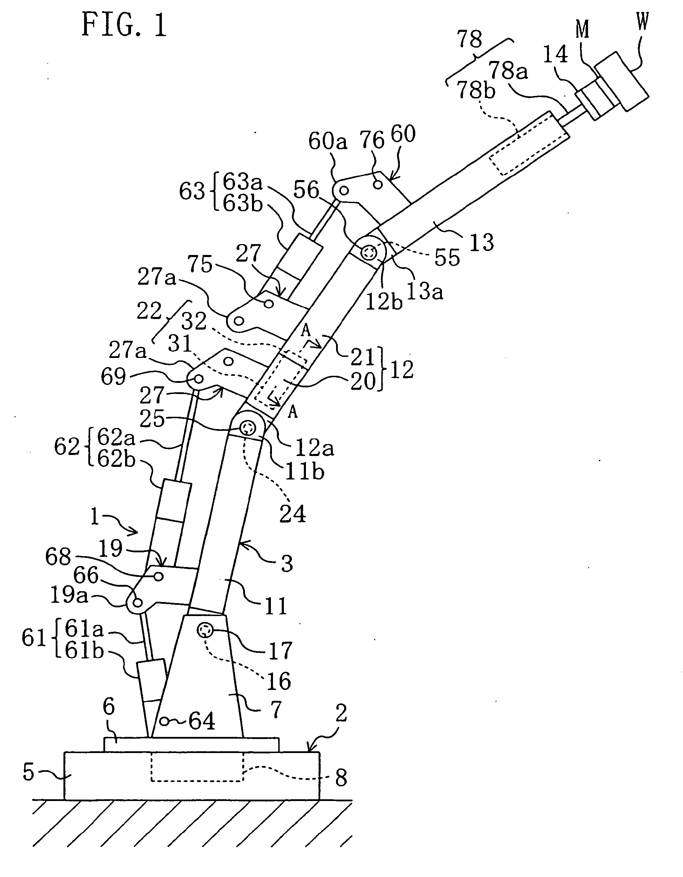

FIG. **1** shows an articulated industrial robot **1** according to an embodiment of the present invention. For example, the robot **1** is used for carrying a workpiece **W** (only shown in FIG. **1**) in a vehicle assembly factory, a load handling field, etc.

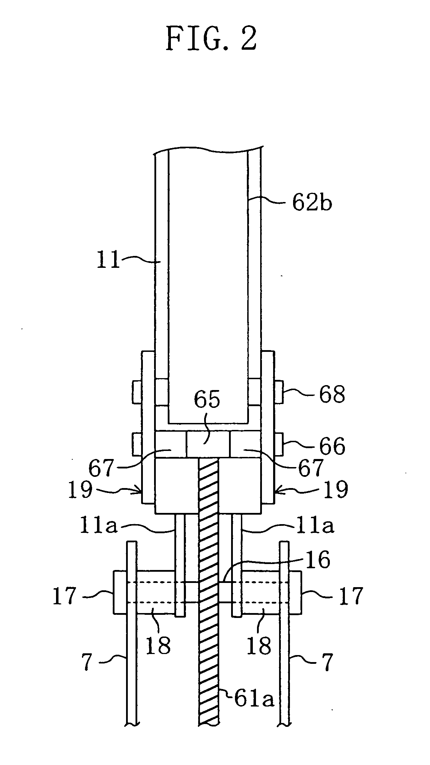

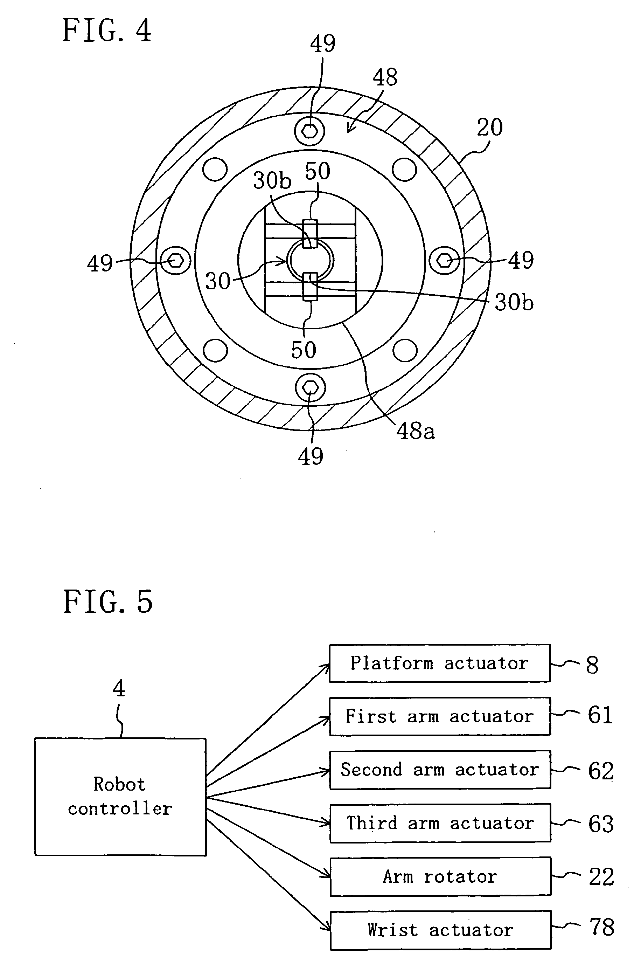

The robot **1** is formed by a base **2** fixed to the ground, a robot arm **3** attached to the base **2,** and a robot controller **4** (shown in FIG. **5**). The base **2** is formed by a principal part **5** which constitutes the lower part of the base **2,** a rotating platform **6** provided on the upper surface of the principal part **5,** and a pair of robot arm supporting elements **7** provided on the upper surface of the rotating platform **6.** The rotating platform **6** supported on the principal part **5** by a pivotal shaft (not shown) which extends generally vertically. The rotating platform **6** is actuated by a platform actuator **8** to rotate around the pivotal shaft. The platform actuator **8** is formed by, for example, a motor, a speed reducer, etc. The robot arm supporting elements **7** each has a plate-like shape which extends upwardly from the upper surface of the rotating platform **6** as also shown in FIG. **2****.** The robot arm supporting elements **7** face each other and are fixed to the rotating platform **6** at the lower ends.

The robot arm **3** includes a base-side arm component **11,** an intermediate arm component **12** and a tip-side arm component **13,** which are sequentially provided from the base **2** to the tip side. The tip-side end of the tip-side arm component **13** is provided with a wrist **14** to which a material hand **M** is attached. The arm components **11** to **13** are each formed by a hollow rod which extends generally vertically.

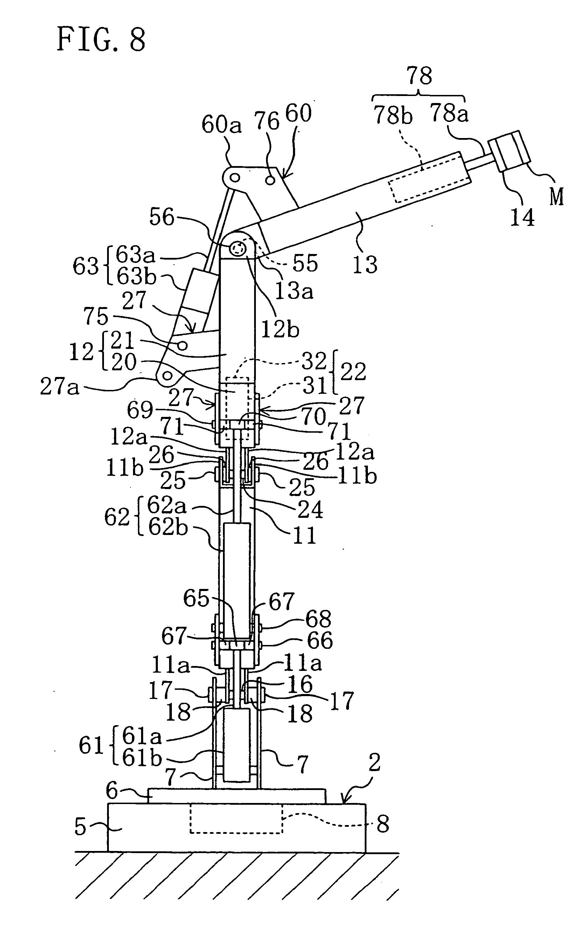

As shown in FIG. **2** and FIG. **8****,** an end of the base-side arm component **11** which is closer to the base **2** is provided with a pair of base-side connectors **11a** protruding in the arm axis direction which is equal to the longitudinal direction of the arm. The base-side connectors **11a** face each other with a certain interval therebetween. The base-side arm component **11** is located such that the base-side connectors **11a** are between the robot arm supporting elements **7** and extends generally in parallel to the supporting elements **7.** With this arrangement, the base-side connectors **11a** are swingably connected to the robot arm supporting elements **7** at a position in the vicinity of the upper end of the supporting elements **7** by a first connection shaft **16** which extends generally horizontally. The first connection shaft **16** penetrates through the robot arm supporting elements **7** and the base-side connectors **11a.** The both ends of the first connection shaft **16** are provided with detachably-attached stoppers **17** for preventing the first connection shaft **16** from dropping out. Also provided between the robot arm supporting elements **7** and the base-side connectors **11a** are cylindrical spacers **18** through which the first connection shaft **16** is inserted.

The outer surface of an end of the base-side arm component **11** which is closer to the base **2** is provided with a pair of first plate members **19** protruding in a radial direction of the arm component **11** as also shown in FIG. **1****.** The first plate members **19** have the same shape and extend generally in parallel to each other with a certain interval therebetween as shown in FIG. **2****.** Referring to FIG. **1****,** the protrusion tip of each first plate member **19** has a bent nose **19a** which is bent toward the base-side end of the base-side arm component **11.** Referring to FIG. **8****,** the tip-side end of the base-side arm component **11** is provided with a pair of tip-side connectors **11b** protruding in the arm axis direction. The tip-side connectors **11b** face each other with a certain interval therebetween.

The intermediate arm component **12** is the second arm component of the claimed inventions. As also shown in FIG. **1****,** the intermediate arm component **12** is divided at an axially intermediate position into a base-side part **20** and a tip-side part **21** and has an arm rotator **22** (rotation means) for rotating the tip-side part **21** around the arm axis relative to the base-side part **20.** As shown in FIG. **13,** the base-side part **20** has a wall **20a** at an end closer to the tip-side part **21,** and the tip-side part **21** has a wall **21a** at an end closer to the base-side part **20.** The walls **20a** and **21a** are connected by connecting means (not shown) so as not to be separated from each other in the arm axis direction but rotatable around the arm axis.

The arm rotator **22** includes a drive shaft **30** which has a thread groove **30a** in the external surface, a moving device **31** for axially moving the drive shaft **30,** and a threaded member **32** meshed with the thread groove **30a** of the drive shaft **30.** The drive shaft **30** is formed by a trapezoidal screw shaft which has a trapezoidal thread groove extending between the axial ends. The outer surface of the drive shaft **30** has two axially-extending linear guide grooves **30b** which are circumferentially separated by about 180° from each other. The moving device **31** is contained in the hollow region of the base-side part **20.** The threaded member **32** is contained in the hollow region of the tip-side part **21.**

The moving device **31** may be, for example, a device disclosed in Japanese Laid-Open Patent Publication JP-A-2003-343679. Specifically, the moving device **31** includes a motor **33,** a speed reduction mechanism **34** and a nut **35,** which are aligned in the axial direction of the drive shaft **30.** The speed reduction mechanism **34** and the nut **35** are contained in a cylindrical casing **36** extending in the axial direction of the drive shaft **30.** An output shaft **37** of the motor **33** has a cylindrical shape through which the drive shaft **30** is inserted and extends into the casing **36.** The casing **36** is fixed to the base-side part **20.**

The speed reduction mechanism **34** is formed by a planetary gear train. An internal gear **38** of the speed reduction mechanism **34** has a smaller diameter part **38a** on the motor **33** side and a larger diameter **part 38b** on the nut **35** side. The smaller diameter part **38a** and the larger diameter part **38b** are an integral structure. The smaller diameter part **38a** is fixed to the output shaft **37** by a bolt **40** so as to rotate integrally with the output shaft **37.** The inner surface of the larger diameter part **38b** has internal teeth **38c**. The number of the internal teeth **38c** is, for example, **61.**

The inner surface of an axially intermediate part of the casing **36** has an annular attachment portion **41** protruding from the inner surface. A supporting shaft **43** is fixed to the attachment portion **41.** The supporting shaft **43** rotatably supports a planet pinion **42** meshed with the internal teeth **38c** of the internal gear **38.** This structure has a plurality of planet pinions **42** and supporting shafts **43** along the periphery of the internal gear **38.** The number of teeth of each planet pinion **42** is, for example, 16.

In the casing **36,** a cylindrical output rotator **44** which functions as a sun gear is rotatably supported through two bearings **45.** The output rotator **44** has a smaller diameter part **44a** on the motor **33** side and a larger diameter part **44b** on the other side. The smaller diameter part **44a** and the larger diameter part **44b** are an integral structure. The outer surface of the smaller diameter part **44a** has teeth **44c** meshed with the planet pinions **42.** The number of teeth **44c** of the output rotator **44** is, for example, 29.

The bearings **45** are fixed onto the outer surface of the larger diameter part **44b** of the output rotator **44.** The nut **35** is fit in the inner surface of the larger diameter part **44b.** The nut **35** is fixed to the output rotator **44** by a bolt **47.** The inner surface of the nut **35** has a ridge (not shown) meshed with the thread groove **61c** of the rod **61a.** The casing **36** is provided with fixing means for restricting the rotation of the drive shaft **30.** Specifically, a closing member **48** is fixed to the casing **36** by a bolt **49** to close an opening at the end surface of the casing **36.** The closing member **48** is provided with an attachment portion **48a** protruding outwardly of the casing **36.** As also shown in FIG. **4****,** the attachment portion **48a** is provided with two plate-like guiding members **50** as the fixing means. The guiding members **50** fit in the guide grooves **30b** of the drive shaft **30.**

The threaded member **32** has a hole **32a** which has a shape to mesh with the drive shaft 30 and is fixed to the tip-side part **21.**

As shown in FIG. **8****,** an end of the base-side part **20** which is closer to the base **2** is provided with base-side connectors **12a** as is the base-side arm component **11.** The intermediate arm component **12** is located such that the base-side connectors **12a** are between the tip-side connectors **11b** and extends generally in parallel to the tip-side connectors **11b.** With this arrangement, the base-side connectors **12a** are swingably connected to the base-side arm component **11** by a second connection shaft **24** which extends generally horizontally. The second connection shaft **24** has the same structure as that of the first connection shaft **16.** The both ends of the second connection shaft **24** are provided with stoppers **25** as is the first connection shaft **16.** Also provided between the tip-side connectors **11b** of the base-side arm component **11** and the base-side connectors **12a** of the intermediate arm component **12** are cylindrical spacers **26.**

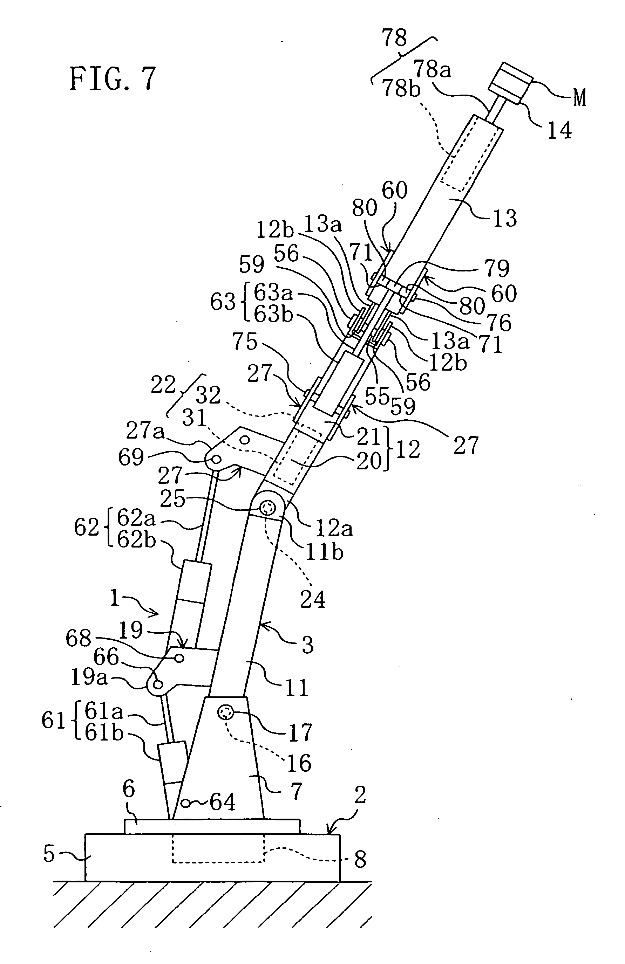

The tip-side end of the tip-side part **21** of the intermediate arm component **12** is provided with a pair of tip-side connectors **12b** protruding in the arm axis direction as shown in FIG. 7. The tip-side connectors **12b** face each other with a certain interval therebetween. The outer surface of the tip-side part **21** and the outer surface of the base-side part **20** are provided with second plate members **27** as also shown in FIG. **8****.** Each of the second plate members **27** has a bent nose **27a** as does the first plate member **19.**

The tip-side arm component **13** is the first arm component of the claimed inventions. Referring to FIG. 7, an end of the tip-side arm component **13** which is closer to the base **2** is provided with base-side connectors **13a** as does the base-side arm component **11.** The tip-side arm component **13** is located such that the base-side connectors **13a** are generally in parallel to the tip-side connectors **12b** of the intermediate arm component **12.** With this arrangement, the base-side connectors **13a** are swingably connected to the intermediate arm component **12** by a third connection shaft **55** which extends generally horizontally. The third connection shaft **55** has the same structure as that of the first connection shaft **16.** The both ends of the third connection shaft **55** are provided with stoppers **56** as is the first connection shaft **16.** Also provided between the tip-side connectors **12b** of the intermediate arm component **12** and the base-side connectors **13a** of the tip-side arm component **13** are cylindrical spacers **59.** As also shown in FIG. **1****,** the outer surface of an end of the tip-side arm component **13** which is closer to the base **2** is provided with third plate members **60.** Each of the third plate members **60** has a bent nose **60a** as does the first plate member **19.**

The base-side arm component **11** is actuated by a base-side arm actuator **61.** The base-side arm actuator **61** includes a rod **61a** and a principal part **61b** for axially moving the rod **61a.** The rod **61a** and the principal part **61b** have the same structures as the drive shaft **30** and the moving device **31,** respectively. The outer surface of the principal part **61b** is rotatably attached to the robot arm supporting elements **7** by a shaft **64** which extends generally in parallel to the first connection shaft **16.** Referring to FIG. **2****,** a pole-like attachment portion **65** extending in a direction perpendicular to the rod **61a** is fixed to an end of the rod **61a.** The attachment portion **65** is located between the bent noses **19a** of the first plate members **19** and rotatably attached to the bent noses **19a** by a shaft **66.** Provided between the attachment portion **65** and the bent noses **19a** are spacers **67.**

Referring to FIG. **1****,** the intermediate arm component **12** is actuated by an intermediate arm actuator **62.** The intermediate arm actuator **62** has a rod **62a** and a principal **part 62b** as does the base-side arm actuator **61.** The principal part **62b** is rotatably attached to the first plate members **19** by a shaft **68.** As shown in FIG. **8****,** an attachment portion **70** provided at an end of the rod **62a** is attached to the bent noses **27a** of the second plate members **27** of the base-side part **20** by a shaft **69.** It should be noted that reference numeral **71** denotes spacers.

The tip-side arm component **13** is actuated by a tip-side arm actuator **63.** The tip-side arm actuator **63** has a rod **63a** and a principal part **63b** as does the base-side arm actuator **61.** The principal part **63b** is rotatably attached to the second plate members **27** of the tip-side part **21** by a shaft **75.** As shown in FIG. **7****,** an attachment portion **79** provided at an end of the rod **63a** is attached to the bent noses **60a** of the third plate members **60** by a shaft **76.** It should be noted that reference numeral **80** denotes spacers. The base-side arm actuator **61,** the intermediate arm actuator **62** and the tip-side arm actuator **63** are the arm actuation means of the claimed inventions.

The tip-side end of the tip-side arm component **13** is provided with a wrist actuator (wrist actuation means) **78** for reciprocating the wrist **14** in the arm axis direction. The wrist actuator **78** includes a rod **78a** and a principal part **78b** for moving the rod **78a** in the arm axis direction. The rod **78a** and the principal part **78b** have the same structures as the drive shaft **30** and the moving device **31,** respectively.

Referring to FIG. **5****,** the platform actuator **8,** the base-side arm actuator **61,** the intermediate arm actuator **62,** the tip-side arm actuator **63,** the arm rotator **22** and the wrist actuator **78** are connected to the robot controller **4** and work independently of one another according to instructions from the robot controller **4.**

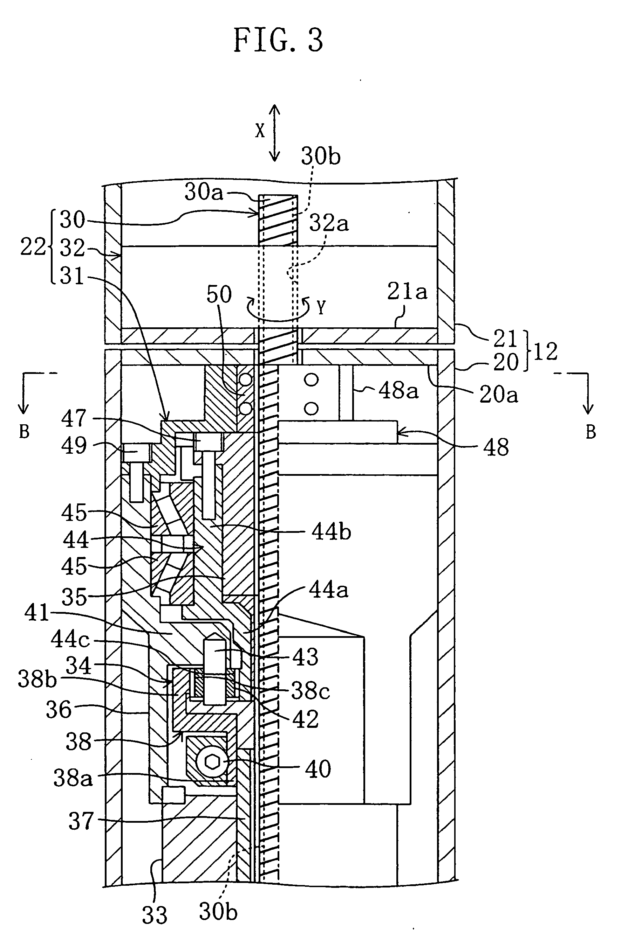

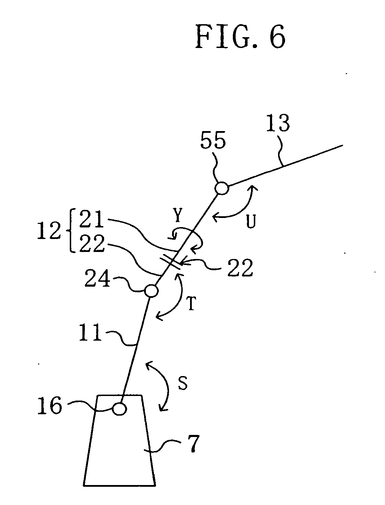

In the industrial robot **1** having the above-described structure, referring to FIG. **3****,** when the robot controller **4** starts the motor **33** of the arm rotator **22,** the output shaft **37** rotates the internal gear **38.** The rotation of the internal gear **38** rotates the planet pinions **42** so that the output rotator **44** and the nut **35** rotate in a direction opposite to the rotation direction of the internal gear **38.** The rotation speed of the nut **35** is reduced by the speed reduction mechanism **34** to a predetermined speed, so that the torque of the nut **35** is increased. Meanwhile, the drive shaft **30** is prevented by the guiding members **50** from rotating and therefore axially travels along the guiding members **50** (in the direction shown by arrow **X** in FIG. **3**). As the drive shaft **30** axially travels, the threaded member **32** meshed with the drive shaft **30** rotates around the drive shaft **30** (in the direction shown by arrow **Y** in FIG. **3**). As a result, as schematically shown in FIG. **6****,** the tip-side part **21** of the intermediate arm component **12** rotates around the arm axis relative to the base-side part **20.** The torque of the tip-side part **21** is obtained by the thrust of the drive shaft **30** which is produced by the moving device **31.** The thrust of the drive shaft **30** is secured high because the speed reduction mechanism **34** provided between the motor **33** and the nut **35** increases the torque of the nut **35.** Therefore, the torque of the tip-side part **21** is sufficiently obtained. The rotation direction of the tip-side part **21** can be changed by changing the rotation direction (forward or reverse) of the motor **33.** The rotation angle of the tip-side part **21** can be set by changing the operating period of the motor **33.**

When the robot controller **4** activates a motor (not shown) of the base-side arm actuator **61** in the forward or reverse direction, the rod **61a** axially travels so that the length of a part of the rod **61a** which is protruding out of the principal part **61b** is changed. Accordingly, the base-side arm component **11** swings around the first connection shaft **16** as shown by arrow **S** in FIG. **6****.** Likewise, the intermediate arm component **12** and the tip-side arm component **13** are respectively actuated by the intermediate arm actuator **62** and the tip-side arm actuator **63** to swing around the second connection shaft **24** and the third connection shaft **55** as shown by arrow **T** and arrow **U** in FIG. **6****.** Further, when the platform actuator **8** is activated, the whole robot arm **3** rotates around the vertical axis.

When the tip-side part **21** of the intermediate arm component **12** in the state shown in FIG. **1** is rotated by the arm rotator **22** by about 90° to be in the state shown in FIG. **7** and FIG. **8****,** the tip-side arm component **13,** the third connection shaft **55** and the tip-side arm actuator **63** rotate in the same direction by the same rotation angle. By rotating the tip-side arm component **13** together with the third connection shaft **55** and the tip-side arm actuator **63,** the swing direction of the tip-side arm component **13** can be changed. As a result, the robot arm **3** gains improved flexibility in movement.

Workpiece **W** can be moved in the arm axis direction only by powering a motor (not shown) of the wrist actuator **78** without rotating the rotating platform **6** or swinging the arm components **11** or **12.** The moving direction of the wrist **14** can be changed by changing the rotation direction (forward or reverse) of the motor (not shown) of the wrist actuator **78.**

Now consider a case where the industrial robot **1** is installed in a vehicle assembly factory. In this case, although not shown, a steering wheel (workpiece **W**) on a pallet, or the like, is grasped by the wrist **14** and transferred to a driver's seat of a vehicle through a door opening in a body of the vehicle. Thereafter, a steering shaft of the vehicle body is inserted through an attachment hole of the steering wheel. For example, also in the process of installing a seat in the vehicle body, the seat (workpiece **W**) is grasped outside the vehicle compartment and then transferred into the vehicle compartment. Thereafter, attachment holes of the seat are aligned with attachment positions in the vehicle. Thus, in the process of transferring workpiece **W** grasped outside the vehicle compartment into the vehicle compartment, the transfer route is complicated because of pallets and vehicle parts distributed around the vehicle body. In this case, the arm rotator **22** is activated to change the swing direction of the tip-side arm component **13** as described above such that the arm components **11** to **13** and workpiece **W** are not interfered with by the pallets or vehicle parts. The industrial robot **1** can also be used for purposes other than attaching vehicle interior parts, for example, for attaching tires to the vehicle body.

In the process of installing a steering wheel, at the step of inserting a steering shaft in an attachment hole of the steering wheel, the robot arm **3** positions the steering wheel such that the attachment hole of the steering wheel is on an extension line of the steering shaft and that the arm axis line of the tip-side arm component **13** is generally coincident with the extension line of the steering shaft. Thereafter, the steering shaft can be inserted in the attachment hole of the steering wheel only by advancing the wrist **14** in the arm axis direction using the wrist actuator **78.** This also applies to the step of inserting bolts in fastening holes of a tire wheel in a tire attaching process.

As described above, in the industrial robot **1** of this embodiment, the intermediate arm component **12** is divided into the base-side part **20** and the tip-side part **21,** and the tip-side part **21** is rotated relative to the base-side part **20.** Therefore, the swing direction of the tip-side arm component **13** can be changed, and the flexibility in movement of the robot arm **3** can be improved. Thus, the robot arm **3** can be moved such that arm components and workpiece **W** are not interfered with by the surrounding articles without removing articles around the place where workpiece **W** exists and the destination to which workpiece **W** is to be transferred or moving the robot arm itself to a different place. As a result, the robot arm **3** can smoothly transfer workpiece **W.**

Since the moving device **31** of the arm rotator **22** is contained in the base-side part **20** and the threaded member **32** is contained in the tip-side part **21,** the robot arm **3** having the arm rotator **22** can be compactly constructed.

Since the moving device **31** of the arm rotator **22** includes the speed reduction mechanism **34,** the tip-side part **21** can be rotated with sufficient force using a low-power, light-weight motor **33.** Therefore, the robot arm **3** having the arm rotator **22** can be a light-weight robot arm.

Since the wrist **14** is moved by the wrist actuator **78** in the arm axis direction, workpiece **W** can be moved in the arm axis direction without rotating the rotating platform **6** or swinging the arm components **11** to **13.** Thus, the flexibility in movement of the robot arm **3** can be further improved. When the wrist **14** is thus moved in the arm axis direction, it is not necessary to control the platform actuator **8** or the arm actuators **61** to **63.** Therefore, the control of the robot arm **3** can be simplified.

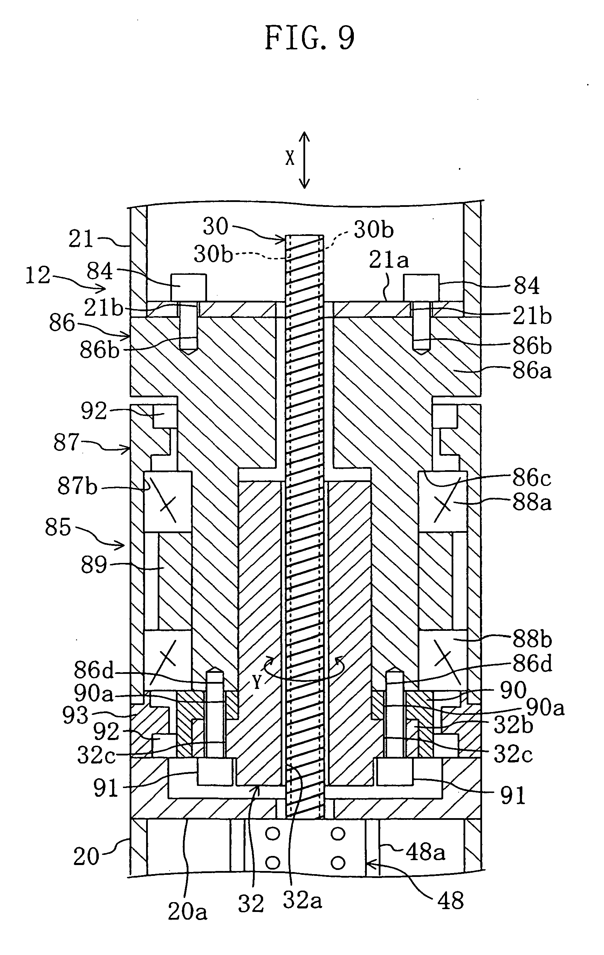

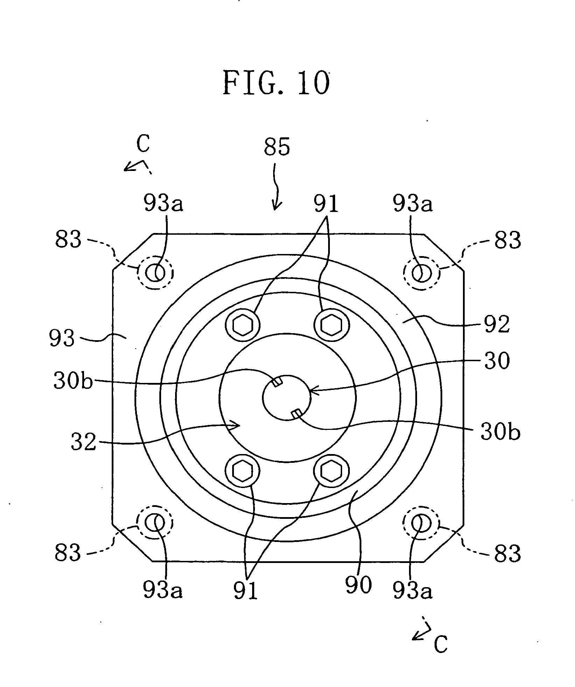

The base-side part **20** and the tip-side part **21** of the intermediate arm component **12** may be connected by a connecting element **85** shown in FIG. **9** and FIG. **10** so as not to be separated from each other in the arm axis direction but rotatable around the arm axis.

Referring to FIG. **9****,** the connecting element **85** includes a first cylindrical member **86** surrounding the drive shaft **30,** a second cylindrical member **87** surrounding the outer surface of the first cylindrical member **86,** and two bearings **88a** and **88b** provided between the outer surface of the first cylindrical member **86** and the inner surface of the second cylindrical member **87.**

At an end of the first cylindrical member **86** which is adjacent to the tip-side part **21** is a flange **86a** integrally formed by molding. The flange **86a** has a plurality of axially-extending screw holes **86b** opened in the surface closer to the tip-side part **21.** The screw holes **86b** are aligned along the circumference of the first cylindrical member **86** with certain intervals. The wall **21a** of the tip-side part **21** has through holes **21b** at positions corresponding to the screw holes **86b.** Bolts **84** are inserted through the through holes **21b** and meshingly inserted into the screw holes **86b,** whereby the first cylindrical member **86** is fixedly fastened to the tip-side part **21.**

An end surface of the first cylindrical member **86** which is closer to the base-side part **20** has a plurality of screw holes **86d** which are aligned along the circumference of the first cylindrical member **86** with certain intervals. The outer surface of the first cylindrical member **86** has a step **86c** in which the inner surface of the bearing **88a** fits. The bearing **88b** is separate from the bearing **88a** and is closer to the base-side part **20** than the bearing **88a** is. Between the bearings **88a** and **88b** is a cylindrical collar **89** for maintaining the interval between the bearings **88a** and **88b.** It should be herein noted that the bearings **88a** and **88b** are thrust bearings.

In an application where the connecting element **85** is used, the threaded member **32** has a cylindrical shape elongated in the axial direction of the drive shaft **30.** An end of the threaded member **32** which is closer to the tip-side part **21** is inserted inside the first cylindrical member **86.** At an end of the threaded member **32** which is closer to the base-side part **20** is a flange **32b** integrally formed by molding. The flange **32b** has a plurality of through holes **32c** axially penetrating at positions corresponding to the screw holes **86d.** When a side of the connecting element **85** is seen, the bearings **88a** and **88b** overlap the hole **32a** of the threaded member **32.**

Provided between the first cylindrical member **86** and the flange **32b** of the threaded member **32** is an annular holding member **90** for holding the bearings **88a** and **88b** between the step **86c** and the holding member **90.** The holding member **90** has a plurality of through holes **90a** axially penetrating at positions corresponding to the screw holes **86d.** Bolts **91** are inserted through the through holes **32c** of the flange **32b** and the through holes **90a** of the holding member **90** and meshingly inserted into the screw holes **86d,** whereby the holding member **90** and the threaded member **32** are made integral with the first cylindrical member **86.** With this arrangement, the inner surfaces of the bearings **88a** and **88b** are fixed to the first cylindrical member **86.**

Provided between the inner surface of an end of the second cylindrical member **87** which is closer to the tip-side part **21** and the outer surface of the first cylindrical member **86** is an annular sealing member **92.** The inner surface of the second cylindrical member **87** has a step **87b** in which the outer surface of the bearing **88a** fits. An end of the second cylindrical member **87** which is closer to the base-side part **20** is provided with an annular abutting member **93** which abuts on the outer periphery of the bearing **88b.** The abutting member **93** fixed to the second cylindrical member **87** by a bolt (not shown) or the like. With this arrangement, the second cylindrical member **87** is integral with the outer periphery of the bearings **88a** and **88b** so that the second cylindrical member **87** does not axially travel relative to the first cylindrical member **86.** Meanwhile, the second cylindrical member **87** and the abutting member **93** are rotatable around the first cylindrical member **86.** Provided between the inner surface of the abutting member **93** and the outer surface of the holding member **90** is a sealing member **92.**

The end surface of an end of the abutting member **93** which is closer to the base-side part **20** has a plurality of screw holes **93a** which are aligned along the circumference of the abutting member **93** with certain intervals as illustrated in FIG. **10****.** The wall **20a** of the base-side part **20** has through holes (not shown) at positions corresponding to the screw holes **93a.** Bolts **83** (shown by imaginary lines in FIG. **10****)** are inserted through the through holes of the wall **20a** and meshingly inserted into the screw holes **93a,** whereby the second cylindrical member **87** and the abutting member **93** are made integral with the base-side part **20.**

In the intermediate arm component **12** having the above-described connecting element **85,** when the moving device **31** is actuated to move the drive shaft **30** in the direction indicated by arrow **X,** the first cylindrical member **86** integral with the threaded member **32** axially rotates relative to the second cylindrical member **87** which is integral with the base-side part **20** (indicated by arrow **Y**), so that the tip-side part **21** rotates relative to the base-side part **20.**

Although in the above-described example of this embodiment the planetary gear train is provided as the speed reduction mechanism **34** to the moving device **31,** the speed reduction mechanism **34** may be a gear mechanism different from the planetary gear train. Although in the above-described example of this embodiment the drive shaft **30** is a trapezoidal screw shaft formed such that the nut **35** meshes with the trapezoidal screw shaft, the drive shaft **30** may be a ball screw shaft formed such that the nut **35** meshes with the ball screw shaft.

Although in the above-described example of this embodiment the arm rotator **22** is provided to the intermediate arm component **12** for rotating the tip-side part **21,** the arm component to which the arm rotator **22** is provided may be at least one of the arm components **11** and **12** which are positioned closer to the base **2** than the tip-side arm component **13** is. For example, it may be the base-side arm component **11.** Alternatively, each of the base-side arm component **11** and the intermediate arm component **12** may have the arm rotator **22.** With such a design, the flexibility in movement of the robot arm **3** is further improved.

The number of arm components of the robot arm **3** may be 2 or may be 4 or more. These arm components may have different lengths.

The arm actuators **61** to **63** may have, for example, a structure wherein the connection shafts **16, 24** and **55** are rotated by motors. Alternatively, the arm actuators **61** to **63** each may be a hydropneumatic cylinder device.

The industrial robot **1** may be used for, for example, removing a product molded by an injection molding machine, or the like, out of a mold die or attaching an insertion member to a mold die. Further, for example, it is also possible with the industrial robot **1** to transfer workpiece **W** from a pallet to another, to displace workpiece **W** from a pallet, and to place workpiece **W** on a pallet.

### Industrial Applicability

As described above, an industrial robot of the present invention is suitable for, for example, carrying a workpiece in a vehicle assembly factory.

## Claims

1. An articulated industrial robot, comprising: a robot arm (3) including a plurality of arm components (11, 12, 13) swingably connected to one another by connection shafts (16,24,55); and a base (2) to which the robot arm is connected, wherein
the robot arm includes arm actuation means (61, 62, 63) for swinging the arm components,
the arm components includes a first arm component (13) at a tip side of the robot arm, the first arm component having a wrist (14) at its tip-side end,
the arm components includes a second arm component (12) which is closer to the base than the first arm component is, the second arm component being divided at an axially intermediate position into a base-side part (20) and a tip-side part (21), and the second arm component having rotation means (22) for rotating the tip-side part around the arm axis relative to the base-side part, **characterised in that**
the rotation means includes a drive shaft (30) extending in the arm axis direction and having a thread groove (30a) in its outer surface, a moving device (31) for axially moving the drive shaft, and a threaded member (32) meshed with the thread groove of the drive shaft, and
the moving device is fixed to one of the base-side part and the tip-side part, while the threaded member is fixed to the other.

2. The industrial robot of claim 1, wherein:
the base-side part (20) and the tip-side part (21) are hollow; and
the moving device (31) is contained in one of the base-side part and the tip-side part, while the threaded member (32) is contained in the other.

3. The industrial robot of claim 1 or 2, wherein the moving device includes a nut (35) meshed with the thread groove (30a) of the drive shaft, a motor (33) for rotating the nut around the drive shaft, and a speed reduction mechanism (34) for reducing a rotation speed of the output shaft of the motor to transmit a torque of the motor to the nut.

4. The industrial robot of any one of claims 1 to 3, wherein the first arm component (13) includes wrist actuation means (78) for reciprocating the wrist in the arm axis direction.

## Patentansprüche

1. Eine gegliederter Industrieroboter, der aufweist: einen Roboterarm (3), der eine Vielzahl von Armkomponenten (11, 12, 13) enthält, die durch Verbindungswellen (16, 24, 55) schwenkbar miteinander verbunden sind; und eine Basis (2), mit der der Roboterarm verbunden ist, wobei
der Roboterarm Armbetätigungsmittel (61, 62, 63) zum Schwenken der Armkomponenten enthält,
die Armkomponenten eine erste Armkomponente (13) an einer Endseite des Roboterarms enthalten, wobei die erste Armkomponente an ihrem endseitigen Ende Nebenachsen (14) hat,
die Armkomponenten eine zweite Armkomponente (12) enthalten, die näher an der Basis ist als die erste Armkomponente, wobei die zweite Armkomponente an einer axialen Zwischenposition in einen basis-seitigen Abschnitt (20) und einen end-seitigen Abschnitt (21) geteilt ist, und die zweite Armkomponente Drehmittel (22) zum Drehen des endseitigen Abschnitts um die Armachse, relativ zu dem basis-seitigen Abschnitt, hat, **dadurch gekennzeichnet, dass**
das Drehmittel eine Antriebswelle (30) enthält, die sich in Richtung der Armachse erstreckt und eine Gewinderille (30a) in der äußeren Oberfläche hat, ein Bewegungsgerät (31), zur axialen Bewegung der Antriebswelle, und ein Gewindebauteil (32), das in Eingriff mit der Gewinderille der Antriebswelle ist, und
das Bewegungsgerät an dem basis-seitigen Abschnitt oder dem end-seitigen Abschnitt befestigt ist, während das Gewindebauteil an dem Anderen befestigt ist.

2. Der Industrieroboter gemäß Anspruch 1, wobei:
der basis-seitige Abschnitt (20) und der end-seitige Abschnitt (21) hohl sind; und
das Bewegungsgerät (31) in dem basis-seitigen Abschnitt oder dem end-seitigen Abschnitt enthalten ist, während das Gewindebauteil (32) in dem Anderen enthalten ist.

3. Der Industrieroboter gemäß Anspruch 1 oder 2, wobei das Bewegungsgerät eine Mutter (35), die mit der Gewinderille (30a) der Antriebswelle in Eingriff ist, einen Motor (33) zum Drehen der Mutter um die Antriebswelle, und einen Geschwindigkeitsreduktionsmechanismus (34), zur Reduktion der Drehzahl der Abtriebswelle des Motors, um ein Drehmoment des Motors auf die Mutter zu übertragen, enthält.

4. Der Industrieroboter gemäß einem der Ansprüche 1 bis 3, wobei die erste Armkomponente (13) Nebenachsenbetätigungsmittel (78), zum Hin- und Herbewegen der Nebenachsen in Richtung der Armachse, enthält.

## Revendications

1. Robot industriel articulé, comprenant : un bras de robot (3) comprenant une pluralité de composants de bras (11, 12, 13) raccordés de manière pivotante les uns aux autres par des arbres de raccordement (16, 24, 55) ; et une base (2) à laquelle le bras de robot est raccordé, dans lequel :
le bras de robot comprend des moyens d'actionnement de bras (61, 62, 63) pour faire pivoter les composants de bras, les composants de bras comprennent un premier composant de bras (13) au niveau d'un côté de la pointe du bras de robot, le premier composant de bras ayant un poignet (14) au niveau de son extrémité du côté de la pointe,
les composants de bras comprennent un second composant de bras (12) qui est plus près de la base que ne l'est le premier composant de bras, le second composant de bras étant divisé à une position axialement intermédiaire dans une partie du côté de la base (20) et une partie du côté de pointe (21) et le second composant de bras ayant des moyens de rotation (22) pour faire tourner la partie du côté de la pointe autour de l'axe de bras par rapport à la partie du côté de la base,
**caractérisé en ce que :**
les moyens de rotation comprennent un arbre d'entraînement (30) s'étendant dans la direction de l'axe du bras et ayant une rainure de filetage (30a) sur sa surface externe, un dispositif mobile (31) pour déplacer axialement l'arbre d'entraînement, et un élément fileté (32) engrené avec la rainure de filetage de l'arbre d'entraînement, et
le dispositif mobile est fixé sur l'une parmi la partie du côté de la base et la partie du côté de la pointe, alors que l'élément fileté est fixé sur l'autre.

2. Robot industriel selon la revendication 1, dans lequel :
la partie du côté de la base (20) et la partie du côté de la pointe (21) sont creuses ; et
le dispositif mobile (31) est contenu dans l'une parmi la partie du côté de la base et la partie du côté de la pointe, alors que l'élément fileté (32) est contenu dans l'autre.

3. Robot industriel selon la revendication 1 ou 2, dans lequel le dispositif mobile comprend un écrou (35) engrené avec la rainure de filetage (30a) de l'arbre d'entraînement, un moteur (33) pour faire tourner l'écrou autour de l'arbre d'entraînement, et un mécanisme de réduction de vitesse (34) pour réduire une vitesse de rotation de l'arbre de sortie du moteur afin de transmettre un couple du moteur à l'écrou.

4. Robot industriel selon l'une quelconque des revendications 1 à 3, dans lequel le premier composant de bras (13) comprend des moyens d'actionnement de poignet (78) pour faire effectuer un mouvement de va-et-vient au poignet dans la direction de l'axe de bras.
